# EUROPEAN PATENT SPECIFICATION

(11) **EP 2 929 719 B1**
(45) Date of publication and mention of the grant of the patent: **01.02.2017**
(21) Application number: 12798274.2
(22) Date of filing: 05.12.2012
(51) Int. Cl.: H04W 36/00

(54) **RE-CONNECTING TO A SOURCE CELL IN COMMUNICATIONS**
NEUVERBINDUNG MIT EINER QUELLZELLE IN EINER KOMMUNIKATION
RECONNEXION À UNE CELLULE SOURCE DE COMMUNICATION

(43) Date of publication of application: 14.10.2015
(73) Proprietor: Nokia Solutions and Networks Oy, 02610 Espoo (FI)
(72) Inventor: MICHAELSEN, Per Henrik, DK-9000 Aalborg (DK); KOLDING, Troels Emil, DK-9270 Klarup (DK); PEDERSEN, Klaus Ingemann, DK-9000 Aalborg (DK); FREDERIKSEN, Frank, DK-9270 Klarup (DK); DALSGAARD, Lars, FI-90230 Oulu (FI)
(74) Representative: Nokia Corporation
(86) International application number: PCT/EP2012/074491
(87) International publication number: WO 2014/086407

(56) References cited:
- EP-A1- 1 881 720
- EP-A1- 2 073 578
- EP-B1- 2 160 914

## Description

### FIELD OF THE INVENTION

The exemplary and non-limiting embodiments of this invention relate generally to wireless communications networks, and more particularly to re-connecting to a source cell.

### BACKGROUND ART

The following description of background art may include insights, discoveries, understandings or disclosures, or associations together with dis-closures not known to the relevant art prior to the present invention but provided by the invention. Some such contributions of the invention may be specifically pointed out below, whereas other such contributions of the invention will be apparent from their context.

An existing simplified call setup to small cells (home eNBs) implies a lack of admission control. This means that quality of service is not considered, and HeNB accepts a hand-in every time, with an exception that user terminals are not handed over to a cell with a closed subscriber group (CSG), if the user terminal is not a member of the group. Hence, there is no way of controlling whether the quality of service provided by the small cell after a handover is sufficient for the user terminal's needs.

### SUMMARY

The following presents a simplified summary of the invention in order to provide a basic understanding of some aspects of the invention. This summary is not an extensive overview of the invention. It is not intended to identify key/critical elements of the invention or to delineate the scope of the invention. Its sole purpose is to present some concepts of the invention in a simplified form as a prelude to the more detailed description that is presented later.

Various aspects of the invention comprise a method, apparatuses, computer program product, and a computer-readable storage medium as defined in the independent claims. Further embodiments of the invention are disclosed in the dependent claims.

An aspect of the invention relates to a method for re-connecting a user terminal to a source cell in a communications system, the method comprising providing, in a network apparatus, a value of a safety period parameter such that a corresponding safety period applies immediately after a successful handover of the user terminal from the source cell to a configured target cell, wherein an immediate re-connecting of the user terminal to the source cell is applicable within the safety period; informing the user terminal on applying the safety period, the value of the safety period parameter, as well as on QoS-based triggering rules for the immediate re-connecting of the user terminal to the source cell; and triggering, if needed, the immediate re-connecting of the user terminal to the source cell according to the QoS-based triggering rules.

In an embodiment, the method comprises resetting the safety period parameter immediately after a further successful handover of the user terminal (203) from the target cell to a further cell.

In an embodiment, the QoS-based triggering rules for the immediate re-connecting of the user terminal (203) to the source cell include QoS-based thresholds signalled from a network to the user terminal (203).

In an embodiment, the method is characterized in that the safety period parameter is shared among the source cell, the target cell, and the user terminal (203).

In an embodiment, the method comprises enabling a fast re-connecting of the user terminal (203) to the source cell by utilizing pre-agreed admission control.

In an embodiment, the method comprises evaluating QoS in a target cell after a handover of the user terminal (203) to the target cell; and providing a possibility for the user terminal (203) to revert the handover by a fast return to the source cell, if the expected and/or experienced QoS does not exceed a predefined threshold value.

In an embodiment, the target cell is a small cell, such as a HeNB cell or a pico cell, and the source cell is a macro cell.

In an embodiment, the source cell is a small cell, such as a HeNB cell or a pico cell, and the target cell is a macro cell.

In an embodiment, in connection with the handover of the user terminal (203) from the source cell to the target cell, or prior to the handover, the user terminal (203) is supplied, by the source cell, the value of the safety period parameter, and the QoS-based triggering rules, wherein the source cell and the user terminal (203) store a context sufficient to facilitate the re-connecting of the user terminal (203) to the source cell, wherein the target cell, the source cell and the user terminal (203) initiate timers keeping track of progress compared to the value of the safety period parameter, wherein the user terminal (203) or the target cell is provided with a return-to-source-cell trigger.

In an embodiment, the return-to-source-cell trigger comprises monitored average throughput within the safety period or other predefined time period being below a value which is a function of a E-RAB GBR parameter; a failure occurring in obtaining a minimum throughput during a given period, shorter than the value of the safety period parameter; a handover trigger configured for a small cell that does not allow for QoS aware aspects; and/or an additional trigger controlled by the source cell.

A further aspect of the invention relates to a source cell apparatus comprising at least one processor; and at least one memory including a computer program code, wherein that the at least one memory and the computer program code are configured to, with the at least one processor, cause the apparatus to define a value of a safety period parameter such that a corresponding safety period applies immediately after a successful handover of a user terminal from a source cell to a configured target cell, wherein an immediate re-connecting of the user terminal to the source cell is applicable within the safety period; and inform the user terminal on applying the safety period, the value of the safety period parameter, as well as on QoS-based triggering rules for the immediate re-connecting of the user terminal to the source cell, in order to the immediate re-connecting of the user terminal to the source cell be triggered, if needed, according to the QoS-based triggering rules.

In an embodiment, the QoS-based triggering rules for the immediate re-connecting of the user terminal to the source cell include QoS-based thresholds signalled from a network to the user terminal (203).

In an embodiment, the target cell is a small cell, such as a HeNB cell or a pico cell, and the source cell is a macro cell.

In an embodiment, the source cell is a small cell, such as a HeNB cell or a pico cell, and the target cell is a macro cell.

In an embodiment, the at least one memory and the computer program code are configured to, with the at least one processor, cause the apparatus to supply, in connection with the handover of the user terminal (203) from the source cell to the target cell, or prior to the handover, the user terminal (203) with the value of the safety period parameter, and the QoS-based triggering rules; store a context sufficient to facilitate the re-connecting of the user terminal (203) to the source cell; and initiate a timer keeping track of progress compared to the value of the safety period parameter; and provide the user terminal (203) or the target cell with a return-to-source-cell trigger.

In an embodiment, the return-to-source-cell trigger comprises monitored average throughput within the safety period or other predefined time period being below a value which is a function of a E-RAB GBR parameter; a failure occurring in obtaining a minimum throughput during a given period, shorter than the value of the safety period parameter; a handover trigger configured for a small cell that does not allow for QoS aware aspects; and/or an additional trigger controlled by the source cell.

A still further aspect of the invention relates to a target cell apparatus comprising at least one processor; and at least one memory including a computer program code, wherein that the at least one memory and the computer program code are configured to, with the at least one processor, cause the apparatus to obtain a value of a safety period parameter defined for a user terminal such that a corresponding safety period applies immediately after a successful handover of a user terminal from a source cell to a target cell, wherein an immediate re-connecting of the user terminal to the source cell is applicable within the safety period; obtain information on QoS-based triggering rules for the immediate re-connecting of the user terminal to the source cell; and trigger, if needed, the immediate re-connecting of the user terminal to the source cell according to the QoS-based triggering rules.

In an embodiment, the QoS-based triggering rules for the immediate re-connecting of the user terminal (203) to the source cell include QoS-based thresholds signalled from a network to the user terminal (203).

In an embodiment, the target cell is a small cell, such as a HeNB cell or a pico cell, and the source cell is a macro cell.

In an embodiment, the source cell is a small cell, such as a HeNB cell or a pico cell, and the target cell is a macro cell.

In an embodiment, the return-to-source-cell trigger comprises monitored average throughput within the safety period or other predefined time period being below a value which is a function of a E-RAB GBR parameter; a failure occurring in obtaining a minimum throughput during a given period, shorter than the value of the safety period parameter; a handover trigger configured for a small cell that does not allow for QoS aware aspects; and/or an additional trigger controlled by the source cell.

A still further aspect of the invention relates to a user terminal comprising at least one processor; and at least one memory including a computer program code, wherein that the at least one memory and the computer program code are configured to, with the at least one processor, cause the user terminal to obtain a value of a safety period parameter such that a corresponding safety period applies immediately after a successful handover of the user terminal from a source cell to a configured target cell, wherein an immediate re-connecting of the user terminal to the source cell is applicable within the safety period; obtain information on QoS-based triggering rules for the immediate re-connecting of the user terminal to the source cell; and trigger, if needed, the immediate re-connecting of the user terminal to the source cell according to the QoS-based triggering rules.

In an embodiment, the QoS-based triggering rules for the immediate re-connecting of the user terminal (203) to the source cell include QoS-based thresholds signalled from a network to the user terminal (203).

In an embodiment, the return-to-source-cell trigger comprises monitored average throughput within the safety period or other predefined time period being below a value which is a function of a E-RAB GBR parameter; a failure occurring in obtaining a minimum throughput during a given period, shorter than the value of the safety period parameter; a handover trigger configured for a small cell that does not allow for QoS aware aspects; and/or an additional trigger controlled by the source cell.

In an embodiment, the at least one memory and the computer program code are configured to, with the at least one processor, cause the user terminal (203) to receive, in connection with the handover of the user terminal (203) from the source cell to the target cell, or prior to the handover, from the source cell, the value of the safety period parameter, and the QoS-based triggering rules; store a context sufficient to facilitate the re-connecting of the user terminal (203) to the source cell; initiate a timer keeping track of progress compared to the value of the safety period parameter; and receive a return-to-source-cell trigger.

In an embodiment, the at least one memory and the computer program code are configured to, with the at least one processor, cause the user terminal (203) to after handover completion, monitor QoS relative to a provided return-to-source-cell trigger, wherein if a trigger event takes place and the safety period has not yet passed, initiate the re-connecting to the source cell; and notify the target cell on the initiation in order the target cell to commands the user terminal (203) to re-connect to the source cell.

A still further aspect of the invention relates to a computer program product comprising program code means configured to perform any of the method steps when the program is run on a computer.

A still further aspect of the invention relates to a computer-readable storage medium comprising program code means configured to perform any of the method steps when executed on a computer.

EP2160914 B1 discloses radio resource management or handover management in a mobile communication network in particular avoiding "ping-pong" handover.

### BRIEF DESCRIPTION OF THE DRAWINGS

In the following the invention will be described in greater detail by means of exemplary embodiments with reference to the attached drawings, in which
Figure 1 a illustrates an exemplary communications network where small cells are densely deployed;
Figure 1b illustrates an exemplary communications network where small cells are sparsely deployed;
Figure 2 shows a simplified block diagram illustrating exemplary system architecture;
Figure 3 illustrates apparatuses according to an exemplary embodiment of the invention;
Figure 4 shows a messaging diagram illustrating an exemplary messaging event according to an embodiment of the invention;
Figure 5 shows a schematic diagram of a flow chart according to an exemplary embodiment of the invention;
Figure 6 shows a schematic diagram of a flow chart according to an exemplary embodiment of the invention;
Figure 7 shows a schematic diagram of a flow chart according to an exemplary embodiment of the invention.

### DETAILED DESCRIPTION OF SOME EMBODIMENTS

In E-UTRAN, a home eNB (HeNB) has been standardized with an intent of having a low-cost small cell, likely without an X2 interface, and a simplified call setup. The latter implies the lack of admission control which means that quality of service (QoS) is not considered, and HeNB always accepts a hand-in, with an exception that UEs are not handed over to a cell with a closed subscriber group (CSG), if UE is not a member. The strategy for the use of the small cells is likely to be aggressive in order to achieve a high amount of off-loading to these cells. This means that there is a lack of a mechanism for ensuring that QoS experienced in the small cells is above minimum requirements, as by the service level agreement for the subscription, which maps to E-RAB QoS settings.

An exemplary embodiment is addressing a possibility of evaluating QoS after hand-in, and providing a possibility for UE to revert the handover by a fast re-connect to the original cell, if the expected or experienced QoS is not sufficient according to different metrics. An exemplary embodiment is still based on qualified QoS handling being done by the network, which results in decisions on which handover scheme to choose, and eventually how to setup UE to perform the related operations that is a part of the scheme. The network remains in control of the overall process.

An exemplary embodiment is applicable for any type of cells where it is advantageous to enable fast return based on QoS measurements. An exemplary embodiment may involve small cells, e.g. HeNB cells or pico cells, accepting a handover from larger cells, e.g. macro cells, primarily with the purpose of off-loading the macro cell by aggressively moving connections to the smaller cell. The two types of cells are likely deployed on different carriers, i.e. the handover is inter-frequency, but an exemplary embodiment may also be applied with co-channel deployment, i.e. an intra-frequency handover among cells on a same carrier.

Performance of (indoor) small cells may be challenged due to low-cost implementation, challenging propagation conditions, and sub-optimal placement. To reduce cost and complexity of procedures, quality of service based admission control has been removed from the lowest cost BTS classes, which allows the macro layer to utilize small cells for offloading but without having to take responsibility for the quality of service during transitions between layers. As the network relies more on the small cells for delivering capacity and coverage, it may however be important to have means for acting on sudden loss of QoS/QoE and at the same time the ability for the macro layer to have some means of control of such mechanisms.

One concept has been considered in 3GPP as part of "Enhanced re-establishment after radio link failure (RLF)". However, this concept is based on returning the user very fast after RLF has been detected. The detection of RLF is based on the probability reception of PDCCH and is as such not related to QoS offered by the cell.

An exemplary embodiment relates to enabling a fast return to a macro cell for a case where QoS in the cell is not fulfilled. An exemplary embodiment the fast return to the macro cell may be carried out using methods other than RLF.

Existing handover procedures have been described in 3GPP TS 36.300, section 10. The different handover procedures for various situations are described, and as such these procedures are focused on centralized control and negotiation between network entities before any handover is performed. Quality of service handling in connection to HeNBs is described in section 13.3 of 3GPP TS 36.300, while QoS control for the macro-pico is handled through the admission control entity in a target eNB.

In an exemplary embodiment, a fast return to macro cell concept is provided for improving end user experience in heterogeneous networks with low-cost small cells. An exemplary embodiment involves introducing a method that enables a fast QoS based return-to-macro (or return-to-source). Thus a safety concept is provided, which involves a scheme and methods between three network elements i.e. a macro cell (or source cell), small cell (or target cell), and UE.

An exemplary embodiment introduces an agreed "safety period" parameter which is shared among each entity involved, i.e. the macro cell, the small cell, and UE. Within this period a very fast return to the macro cell may be applied. The time period (safety period) applies immediately after a successful handover from the macro cell to a configured small cell.

An exemplary embodiment enables a method for informing UE about applying the safety period, the actual safety period setting, as well as about triggering rules for the fast return to the source cell, e.g. QoS based thresholds (signalled from the network to UE).

An exemplary embodiment provides mechanisms enabling the fast return to the macro cell to happen very fast, e.g. pre-agreed admission control etc.

An exemplary embodiment provides triggers for resetting the safety period procedure, e.g. the handover to a new cell takes place (the small cell becomes the source cell).

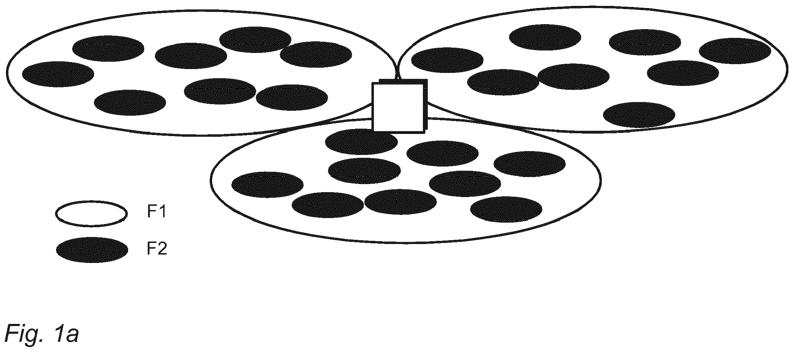

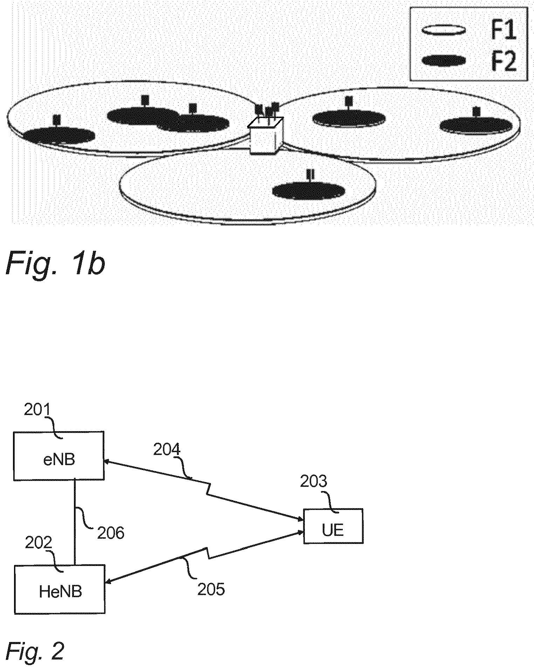

The following is a non-limiting description of a method according to an exemplary embodiment, using one particular small cell deployment as an example case. The method may be applied more generally, but in the following, Figure 1 a is referred to.

In Figure 1a, F1 cells may be providing a macro coverage and the small cells are densely deployed on F2. It should be noted that the method is also applicable for the cases where the small cells on F2 are not densely deployed, but perhaps more sparsely deployed, as illustrated in Figure 1b.

For example, UE may be currently served by a cell referred herein as a large cell on F1, and UE in the vicinity of a cell that is referred herein as a small cell (e.g. on F2). UE is assumed to be within the coverage area of the small cell such that a handover is feasible. UE has likely produced and sent a measurement report to the network including at least the small cell - e.g. it may be that the small cell has triggered the measurement report used as an input to a network handover decision algorithm by the large cell.

The network setup is enforcing off-loading from the large cell towards the small cell, so the handover setup is likely aggressive, which means that the load in the small cell may be high. Therefore the service that may be provided to UE is potentially too low, as compared with E-RAB QoS settings for UE bearers. In this case the service provided to UE deteriorates after a handover to the small cell, in which case it is beneficial for UE to return to the large cell. The network determines the required performance, say trigger a return by throughput being less than X within a time window Y in the small cell. The overall objective is to return UE that is expected to achieve better QoS in the large cell, and it is up to the network to decide how this maps to the setting of parameters, e.g. safety period and thresholds. In some cases the setting may have to be conservative, since the large cell has no knowledge of the small cell, and the handover is effectively "blind". In other cases there is more, maybe full, knowledge of load etc. in the small cell, so settings for the fast return may be optimized accordingly.

As mentioned, low cost small cells are likely to have limited advanced features as opposed to, for instance, the macro cells. The admission check is not necessarily very stringent (or may be missing completely), leading to the case that the serving small cell does not actually have knowledge enough to check if the required QoS for UE is fulfilled or not. Also, due to a complicated propagation environment surrounding the small cells, QoS may also quickly change from an initially expected performance level. Therefore this may lead to a poor user experience, with no specified means of avoiding this except by implementing more advanced and costly features in the small cell.

A special case that may need consideration is when UE does not have data to transmit that is sufficient for achieving a throughput that the network may set as a threshold for fast return. Firstly, it is the network that decides how to set the threshold, and this may take into consideration the current throughput or buffer state of UE. Secondly, the performance after a handover is less critical for UE that has limited amounts of data to transmit. For bursty traffic, the data may come soon after the expiration of the safety period, in which case there is nothing that can be done about it.

The procedure for a fast return to large cell, according to an exemplary embodiment, may be implemented in one of several ways. The difference may be in the roles and ways of interaction between UE and the small cell. The following describes these separately.

### Macro cell controls return-to-macro parameters for UE that conducts handover to small cell

A possible baseline for realizing a proposed method is to maintain, for the duration of the "safety period", the existing, short term, handover fall-back mechanism, as described by 3GPP TS 36.300 10.1.2.1 handover, "both the source eNB and UE keep some context (e.g. C-RNTI) to enable the return of UE in case of HO failure" (3GPP TS 36.331). The existing specification only covers handover failure behaviour. This method may be used as a baseline and extended to include informing UE about applying the 'safety period', the actual 'safety period' setting, as well as the triggering rules for fast return to source cell e.g. QoS based thresholds.

There is also a need to define rules and triggers for when the "fast return to macro cell" can be applied by the UE. 1) Considered is the handover by UE from the large cell to the small cell. 2) In connection with the handover, possibly prior to the handover, UE is supplied a "safety period" by the large cell and rules how to administer a possible fast return. Configuration of needed information may possibly be given by the small cell if this has previously been setup by the large cell to do so following a handover. 3) Both the large cell and UE store sufficient context, e.g. C-RNTI, to facilitate a fast return to the large cell. 4) Each involved network element start timers keeping track of progress compared to safety period setting. 5) UE (or alternatively the small cell) is provided a "fast-return-to-macro" trigger.

Suitable "fast-return-to-macro" trigger examples may be:
- Monitored average throughput within the "safety period" (or other defined window length) being below some value which is a function of the E-RAB GBR parameter (care is to be taken here that lack of offered load does not trigger unnecessary fast-return-to-macro; a benefit of letting the small cell control the return).
- Some minimum throughput is not obtained during a given time window, shorter than a safety period setting.
- Using traditional handover triggers configured for the small cell which does not allow for QoS aware aspects as admission control does not take into account bearer quality to e.g. HeNBs.
- Having additional triggers that may be controlled by the macro cell, e.g. may be based on the observed throughput in the small cell e.g. over a given period of time. Such triggers may then be either configured to UE during the handover or agreed via a management system element, common to both the small cell and the large cell.

An exemplary implementation step is exchange and agreement of parameters between the network elements. The following solutions may be envisioned:
- UE carries the parameters, e.g. UE receives the necessary configuration parameters in a HO command or during a handover procedure.
- The parameters are agreed via a common network function and exchanged between e.g. the macro cell and the small cell. The small cell may then be in control of the executing of the fast return, or the small cell may send the necessary configuration parameters to UE.

It should be noted that an exemplary embodiment is applied at both eNB and UE in order for both entities to have the same understanding of the configuration of the system, or, alternatively, at the macro eNB and the small cell (both implementation options considered below). In the following it is disclosed what happens after the handover has taken place in terms of monitoring QoS after the handover and triggering and controlling the fast-return-to-macro mechanism.

### UE monitors QoS and initiates a fast fall-back to the source cell

1) After handover completion, UE monitors the quality of service (QoS) relative to its provided fast-return-to-macro triggers. 2) If a trigger event takes place and the safety period has not yet passed, it initiates a fast return to the large cell. 3) UE terminates the connection to the small cell, and reconnects to an original prepared large cell.

### UE monitors QoS, network initiates handover

This approach allows the small cell to redirect traffic to the large cell at an early stage. 1) After handover completion, UE monitors the quality of service (QoS) relative to its provided fast-return-to-macro triggers. 2) If a trigger event takes place and the safety period has not yet passed, it initiates a fast return to the large cell. 3) UE notifies the small cell, possibly by means of a measurement report or new message or indication. 4) The small cell commands UE to return to the large cell, possibly by an ordinary handover command.

### Network monitors QoS and initiates handover

This approach involves that parameters are exchanged between the macro cell and the small cell. 1) After handover completion, the small cell monitors the quality of service of the hand-in user according to the provided fast-return-to-macro triggers. 2) If the trigger event takes place and the safety period has not yet passed, it initiates a fast return to the large cell. 3) The small cell commands UE to return to the large cell, possibly by an ordinary handover command.

An exemplary embodiment thus enables aggressive utilization of the small cells at lower cost/quality while ensuring fall-back mechanisms for the end-users. The return-to-macro delay is substantially lowered, as opposed to the time required to perform an ordinary handover. This is due to retaining C-RNTI, and pre-agreed handover event. The mechanism may be configured with special event triggers to adjust tradeoff among macro offload and end-user performance. A scalable mechanism may be provided that may be disabled and focused only towards certain small cells and certain user categories (even UE capability considered).

In an exemplary embodiment, in case the fast return does not work, and radio link performance in the small cell is bad, an ordinary radio link failure mechanism may be employed as usual.

An exemplary embodiment enables having performance synergies between dedicated 3GPP local area spectrum and 3GPP wide area spectrum (e.g. 3,5 GHz). An exemplary embodiment enables generalized aspects but FDD (or TDD) in wide area, and TDD in local area may be assumed. An exemplary embodiment enables methods where 3,5 GHz small cells integrate via "weak" transport to wide area, aka X2 performance speeds or even up to 10 ms range too slow to efficiently allow for multi-path data between the layers. Mobility robustness may be needed from the macro cell for UE that uses the small cell. An exemplary embodiment enables user-specific links between the macro and small cell so that different small cell users simultaneously utilize links to different macro carriers. In an exemplary embodiment, the small cell layer is cheap and may be less robust/stable than connectivity point.

An exemplary embodiment enables a UE functionality in which when UE is handed into a small cell carrier, it remains "lightly" connected to the macro cell carrier. For this link to continue to work (e.g. TA and so forth, does TA really change since "location" does not, or is it more due to drift) UE may need to transmit to the large cell with some time period (like 100 ms range), e.g. it needs to respect some DRX/TRX/measurement requirement from the macro cell that it carries with it after the hand-in.

An exemplary embodiment enables a UE functionality in which as a part of the macro-link process, a measuring or status report is exchanged that allows UE to quickly re-establish full connection to the macro cell which mechanisms are available RACH-wise to the macro cell, so that it may still be run with e.g. 100 ms periodicity.

An exemplary embodiment enables a hand-in functionality in which the macro cell may need to advertise either to a common management system, or directly to the small cell (which requires, however, that global IDs are known or alternatively that UE carries the information with it), which DRX/DTX settings are needed in order to keep this user in a "maintenance mode" and/or in one of the "normal" connection modes.

In an exemplary embodiment, the small cells read from the status of the user coming to the cell (either advertised directly by UE, or by reading incoming messages from macro eNB, or by reading status in a pull mode from the management system looking up the incoming UE ID) what DRX/DTX settings need to be respected in order to allow UE to be connected to the small cell while still being able to "camp" on the macro carrier.

An exemplary embodiment enables a very fast mobility scheme that allows UE to trigger fast re-attachment to the robust macro cell.

An exemplary embodiment enables the use of a common management system where user information is stored. Another exemplary embodiment enables a X2 level integration of two layers.

Exemplary embodiments will now be described more fully hereinafter with reference to the accompanying drawings, in which some, but not all embodiments of the invention are shown. Indeed, the invention may be embodied in many different forms and should not be construed as limited to the embodiments set forth herein; rather, these embodiments are provided so that this disclosure will satisfy applicable legal requirements. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments. Like reference numerals refer to like elements throughout.

The present invention is applicable to any user terminal, network node, server, corresponding component, and/or to any communication system or any combination of different communication systems that support heterogeneous networks. The communication system may be a fixed communication system or a wireless communication system or a communication system utilizing both fixed networks and wireless networks. The protocols used, the specifications of communication systems, network nodes and user terminals, especially in wireless communication, develop rapidly. Such development may require extra changes to an embodiment. Therefore, all words and expressions should be interpreted broadly and they are intended to illustrate, not to restrict, the embodiment.

In the following, different embodiments will be described using, as an example of a system architecture whereto the embodiments may be applied, an architecture based on LTE (or LTE-A) (long term evolution (advanced long term evolution)) network elements, without restricting the embodiment to such an architecture, however. The embodiments described in these examples are not limited to the LTE radio systems but can also be implemented in other radio systems, such as UMTS (universal mobile telecommunications system), GSM, EDGE, WCDMA, bluetooth network, WLAN or other fixed, mobile or wireless network. In an embodiment, the presented solution may be applied between elements belonging to different but compatible systems such as LTE and UMTS.

A general architecture of a communication system is illustrated in Figure 2. Figure 2 is a simplified system architecture only showing some elements and functional entities, all being logical units whose implementation may differ from what is shown. The connections shown in Figure 2 are logical connections; the actual physical connections may be different. It is apparent to a person skilled in the art that the systems also comprise other functions and structures. It should be appreciated that the functions, structures, elements and the protocols used in or for PUCCH resource allocation, are irrelevant to the actual invention. Therefore, they need not to be discussed in more detail here.

The exemplary radio system of Figure 2 comprises a network node 201 of a network operator. The network node 201 may include e.g. an LTE base station of a macro cell (eNB), radio network controller (RNC), or any other network element, or a combination of network elements. The network node 201 may be connected to one or more core network (CN) elements (not shown in Figure 2) such as a mobile switching centre (MSC), MSC server (MSS), mobility management entity (MME), gateway GPRS support node (GGSN), serving GPRS support node (SGSN), home location register (HLR), home subscriber server (HSS), visitor location register (VLR). In Figure 2, the radio network node 201 that may also be called eNB (enhanced node-B, evolved node-B) or network apparatus of the radio system, hosts the functions for radio resource management in a public land mobile network.

The exemplary radio system of Figure 2 comprises a further network node 202 of a network operator. The further network node 202 may include e.g. an LTE base station of a low-cost small cell (home-eNB, HeNB), radio network controller (RNC), or any other network element, or a combination of network elements. The further network node 202 may be connected to one or more core network (CN) elements (not shown in Figure 2) such as a mobile switching centre (MSC), MSC server (MSS), mobility management entity (MME), gateway GPRS support node (GGSN), serving GPRS support node (SGSN), home location register (HLR), home subscriber server (HSS), visitor location register (VLR). In Figure 2, the further radio network node 202 that may also be called HeNB (home enhanced node-B, home evolved node-B) or network apparatus of the radio system, hosts the functions for radio resource management in a public land mobile network.

Figure 2 shows one or more user equipment 203 located in the service area of the radio network node 201, 202. The user equipment refers to a portable computing device, and it may also be referred to as a user terminal. Such computing devices include wireless mobile communication devices operating with or without a subscriber identification module (SIM) in hardware or in software, including, but not limited to, the following types of devices: mobile phone, smart-phone, personal digital assistant (PDA), handset, laptop computer. In the example situation of Figure 2, the user equipment 203 is capable of connecting to the radio network node 201, 202 via a connection 204, 205 respectively. In the example situation of Figure 2, the radio network node 201 is capable of connecting to the radio network node 202 via a connection 206.

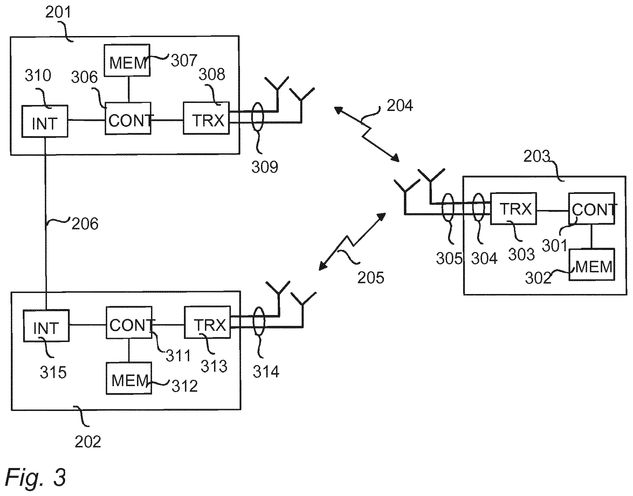

Figure 3 is a block diagram of an apparatus according to an embodiment of the invention. Figure 3 shows a user equipment 203 located in the area of a radio network node 201, 202. The user equipment 203 is configured to be in connection with the radio network node 201, 202. The user equipment or UE 203 comprises a controller 301 operationally connected to a memory 302 and a transceiver 303. The controller 301 controls the operation of the user equipment 203. The memory 302 is configured to store software and data. The transceiver 303 is configured to set up and maintain a wireless connection 204, 205 to the radio network node 201, 202 respectively. The transceiver 303 is operationally connected to a set of antenna ports 304 connected to an antenna arrangement 305. The antenna arrangement 305 may comprise a set of antennas. The number of antennas may be one to four, for example. The number of antennas is not limited to any particular number. The user equipment 203 may also comprise various other components, such as a user interface, camera, and media player. They are not displayed in the figure due to simplicity.

The radio network node 201, such as an LTE base station (eNode-B, eNB) comprises a controller 306 operationally connected to a memory 307, and a transceiver 308. The controller 306 controls the operation of the radio network node 201. The memory 307 is configured to store software and data. The transceiver 308 is configured to set up and maintain a wireless connection to the user equipment 203 within the service area of the radio network node 201. The transceiver 308 is operationally connected to an antenna arrangement 309. The antenna arrangement 309 may comprise a set of antennas. The number of antennas may be two to four, for example. The number of antennas is not limited to any particular number. The radio network node 201 may be operationally connected (directly or indirectly) to another network element of the communication system, such as a further radio network node 202, radio network controller (RNC), a mobility management entity (MME), an MSC server (MSS), a mobile switching centre (MSC), a radio resource management (RRM) node, a gateway GPRS support node, an operations, administrations and maintenance (OAM) node, a home location register (HLR), a visitor location register (VLR), a serving GPRS support node, a gateway, and/or a server, via an interface 310. The further radio network node 202, such as an LTE base station of a low-cost small cell (home-eNB, HeNB) comprises a controller 311 operationally connected to a memory 312, and a transceiver 313. The controller 311 controls the operation of the radio network node 202. The memory 312 is configured to store software and data. The transceiver 313 is configured to set up and maintain a wireless connection to the user equipment 203 within the service area of the radio network node 202. The transceiver 313 is operationally connected to an antenna arrangement 314. The antenna arrangement 314 may comprise a set of antennas. The number of antennas may be two to four, for example. The number of antennas is not limited to any particular number. The radio network node 202 may be operationally connected (directly or indirectly) to another network element of the communication system, such as a radio network node 201, radio network controller (RNC), a mobility management entity (MME), an MSC server (MSS), a mobile switching centre (MSC), a radio resource management (RRM) node, a gateway GPRS support node, an operations, administrations and maintenance (OAM) node, a home location register (HLR), a visitor location register (VLR), a serving GPRS support node, a gateway, and/or a server, via an interface 315. The embodiments are not, however, restricted to the network given above as an example, but a person skilled in the art may apply the solution to other communication networks provided with the necessary properties. For example, the connections between different network elements may be realized with internet protocol (IP) connections.

Although the apparatus 201, 202, 203 has been depicted as one entity, different modules and memory may be implemented in one or more physical or logical entities. The apparatus may also be a user terminal which is a piece of equipment or a device that associates, or is arranged to associate, the user terminal and its user with a subscription and allows a user to interact with a communications system. The user terminal presents information to the user and allows the user to input information. In other words, the user terminal may be any terminal capable of receiving information from and/or transmitting information to the network, connectable to the network wirelessly or via a fixed connection. Examples of the user terminals include a personal computer, a game console, a laptop (a notebook), a personal digital assistant, a mobile station (mobile phone), a smart phone, and a line telephone.

The apparatus 201, 202, 203 may generally include a processor, controller, control unit or the like connected to a memory and to various interfaces of the apparatus. Generally the processor is a central processing unit, but the processor may be an additional operation processor. The processor may comprise a computer processor, application-specific integrated circuit (ASIC), field-programmable gate array (FPGA), and/or other hardware components that have been programmed in such a way to carry out one or more functions of an embodiment.

The memory 301, 307, 312 may include volatile and/or non-volatile memory and typically stores content, data, or the like. For example, the memory 301, 307, 312 may store computer program code such as software applications (for example for the detector unit and/or for the adjuster unit) or operating systems, information, data, content, or the like for a processor to perform steps associated with operation of the apparatus in accordance with embodiments. The memory may be, for example, random access memory (RAM), a hard drive, or other fixed data memory or storage device. Further, the memory, or part of it, may be removable memory detachably connected to the apparatus.

The techniques described herein may be implemented by various means so that an apparatus implementing one or more functions of a corresponding mobile entity described with an embodiment comprises not only prior art means, but also means for implementing the one or more functions of a corresponding apparatus described with an embodiment and it may comprise separate means for each separate function, or means may be configured to perform two or more functions. For example, these techniques may be implemented in hardware (one or more apparatuses), firmware (one or more apparatuses), software (one or more modules), or combinations thereof. For a firmware or software, implementation can be through modules (e.g., procedures, functions, and so on) that perform the functions described herein. The software codes may be stored in any suitable, processor/computer-readable data storage medium(s) or memory unit(s) or article(s) of manufacture and executed by one or more processors/computers. The data storage medium or the memory unit may be implemented within the processor/computer or external to the processor/computer, in which case it can be communicatively coupled to the processor/computer via various means as is known in the art.

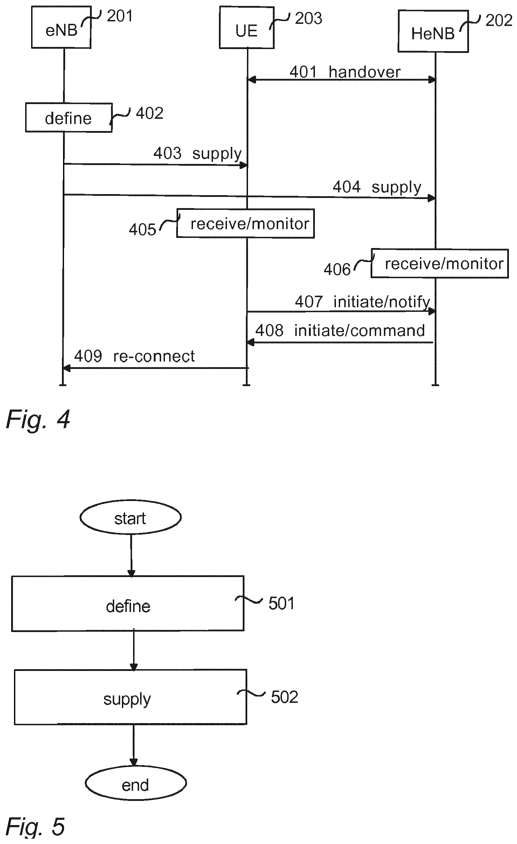

The signalling chart of Figure 4 illustrates the required signalling. In the example of Figure 4, a network node 201 (which may comprise e.g. a LTE-capable base station (enhanced node-B, eNB) of a macro cell (also referred to as a source cell herein)) may define, in item 402, a value of a safety period parameter, such that a corresponding safety period applies immediately after a successful handover 401 of a user terminal UE 203 from the source cell to a configured target cell, wherein an immediate re-connecting of the user terminal 203 to the source cell is applicable within the safety period. The defining step 402 may be carried out in connection with the handover 401 from the source cell 201 to the target cell 202, or before the handover 401. In item 403, the network node 201 may transmit information to the user terminal on applying the safety period, the value of the safety period parameter, as well as on QoS-based triggering rules for the immediate re-connecting of the user terminal to the source cell. In item 404, the network node 201 may transmit information to a network node 202 (which may comprise e.g. an LTE base station (home-eNB, HeNB) of a low-cost small cell (also referred to as a target cell herein)) on applying the safety period, the value of the safety period parameter, as well as on the QoS-based triggering rules for the immediate re-connecting of the user terminal to the source cell. In item 405, the user terminal 203 may receive the information on applying the safety period, the value of the safety period parameter, and the QoS-based triggering rules. Also/alternatively, in item 405, the user terminal 203 may monitor/evaluate QoS of the target cell after the handover 401 of the user terminal 203 to the target cell. In item 406, HeNB 202 may receive the information on applying the safety period, the value of the safety period parameter, and the QoS-based triggering rules. Also/alternatively, in item 406, HeNB 202 may monitor/evaluate QoS of the target cell after the handover 401 of the user terminal 203 to the target cell. In item 407, the user terminal 203 may, if a trigger event takes place and the safety period has not yet passed, initiate re-connecting of the user terminal 203 to the source cell, and notify the target cell/HeNB 202 on the initiation in order the target cell/HeNB 202 to command the user terminal 203 to re-connect to the source cell (alternatively, the user terminal 203 may, if a trigger event takes place and the safety period has not yet passed, initiate re-connecting of the user terminal 203 to the source cell, and terminate the connection to the target cell/HeNB 202). In item 408, HeNB 202 may (based on the notification 407, or based on the monitoring 406), if a trigger event takes place and the safety period has not yet passed, initiate the re-connecting of the user terminal 203 to the source cell, and command the user terminal 203 to re-connect to the source cell/eNB 201. In item 409, the user terminal 203 re-connects to the source cell/eNB 201 (based on the monitoring 405 (if the trigger event takes place and the safety period has not yet passed), or based on the commanding 408).

Figure 5 is a flow chart illustrating an exemplary embodiment. The apparatus 201, which may comprise e.g. a network element (network node, e.g. a LTE-capable base station (enhanced node-B, eNB) of a macro cell (also referred to as a source cell herein)) may define, in item 501, a value of a safety period parameter, such that a corresponding safety period applies immediately after a successful handover of a user terminal UE 203 from the source cell to a configured target cell, wherein an immediate re-connecting of the user terminal 203 to the source cell is applicable within the safety period. The defining step 501 may be carried out in connection with the handover from the source cell 201 to the target cell 202, or before the handover. In item 502, the network node 201 may transmit information to the user terminal on applying the safety period, the value of the safety period parameter, as well as on QoS-based triggering rules for the immediate re-connecting of the user terminal to the source cell. In item 502, the network node 201 may also transmit information to a network node 202 (which may comprise e.g. an LTE base station (home-eNB, HeNB) of a low-cost small cell (also referred to as a target cell herein)) on applying the safety period, the value of the safety period parameter, as well as on the QoS-based triggering rules for the immediate re-connecting of the user terminal to the source cell.

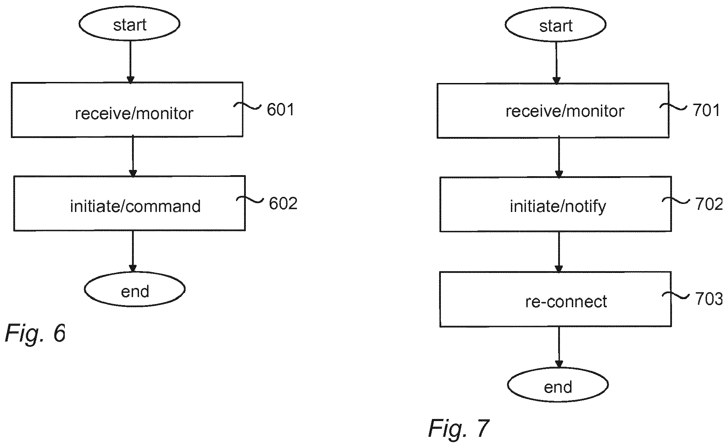

Figure 6 is a flow chart illustrating an exemplary embodiment. The apparatus 202, which may comprise e.g. a network element (network node, e.g. a home LTE-capable base station (home enhanced node-B, HeNB) of a small cell (also referred to as a target cell herein)) may receive, in item 601, from eNB 201, information on applying a safety period, a value of a safety period parameter, and QoS-based triggering rules. Also/alternatively, in item 601, HeNB 202 may monitor/evaluate QoS of the target cell after a handover of a user terminal 203 to the target cell. In item 602, HeNB 202 may (based on a notification 407 received from UE 203, or based on the monitoring 601), if a trigger event takes place and the safety period has not yet passed, initiate re-connecting of the user terminal 203 to the source cell, and command the user terminal 203 to re-connect to the source cell/eNB 201.

Figure 7 is a flow chart illustrating an exemplary embodiment. The apparatus 203, which may comprise e.g. a user terminal (user equipment, UE) may receive, in item 701, from eNB 201, information on applying a safety period, a value of a safety period parameter, and QoS-based triggering rules. Also/alternatively, in item 701, the user terminal 203 may monitor/evaluate QoS of the target cell after a handover of the user terminal 203 to the target cell. In item 702, the user terminal 203 may, if a trigger event takes place and the safety period has not yet passed, initiate re-connecting of the user terminal 203 to the source cell, and notify the target cell/HeNB 202 on the initiation in order the target cell/HeNB 202 to command the user terminal 203 to re-connect to the source cell (alternatively, the user terminal 203 may, if a trigger event takes place and the safety period has not yet passed, initiate re-connecting of the user terminal 203 to the source cell/eNB 201, and terminate the connection to the target cell/HeNB 202). In item 703, the user terminal 203 may re-connect to the source cell/eNB 201 (based on the monitoring 701 (if the trigger event takes place and the safety period has not yet passed), or based on the commanding 408). It will be obvious to a person skilled in the art that, as the technology advances, the inventive concept can be implemented in various ways. The invention and its embodiments are not limited to the examples described above but may vary within the scope of the claims.

### List of abbreviations

- AMC: adaptive modulation and coding
- A/N: acknowledgement/non-acknowledgement
- CA: carrier aggregation
- CQI: channel quality information
- DL: downlink
- eNB: enhanced node-B
- FDD: frequency division duplex
- HARQ: hybrid automatic repeat request
- L1: layer-1
- L2: layer-2
- PCell: primary cell
- PDCCH: physical downlink control channel
- PUCCH: physical uplink control channel
- PUSCH: physical uplink shared channel
- PS: packet scheduling
- RF: radio frequency
- RLF: radio link failure
- RRM: radio resource management
- SCell: secondary cell
- TA: timing advanced
- TDD: time division duplex
- UCI: uplink control information
- UE: user equipment
- UL: uplink
- HeNB: home-eNB

## Claims

1. A method for re-connecting a user terminal (203) to a source cell in a communications system, comprising the steps of providing, in a network apparatus, a value of a safety period parameter such that a corresponding safety period applies immediately after a successful handover of the user terminal (203) from the source cell to a configured target cell, wherein an immediate re-connecting of the user terminal (203) to the source cell is applicable within the safety period;
informing the user terminal (203) on applying the safety period, the value of the safety period parameter, as well as on QoS-based triggering rules for the immediate re-connecting of the user terminal (203) to the source cell; and
triggering, if needed, the immediate re-connecting of the user terminal (203) to the source cell according to the QoS-based triggering rules.

2. A source cell apparatus (201) comprising at least one processor; and at least one memory including a computer program code, the at least one memory and the computer program code are configured to, with the at least one processor, cause the apparatus (201) to
define a value of a safety period parameter such that a corresponding safety period applies immediately after a successful handover of a user terminal (203) from a source cell to a configured target cell, wherein an immediate re-connecting of the user terminal (203) to the source cell is applicable within the safety period; and
inform the user terminal (203) on applying the safety period, the value of the safety period parameter, as well as on QoS-based triggering rules for the immediate re-connecting of the user terminal (203) to the source cell, in order to the immediate re-connecting of the user terminal (203) to the source cell be triggered, if needed, according to the QoS-based triggering rules.

3. An apparatus as claimed in claim 2, the at least one memory and the computer program code are configured to, with the at least one processor, cause the apparatus to reset the safety period parameter immediately after a further successful handover of the user terminal (203) from the target cell to a further cell.

4. An apparatus as claimed in claim 2, or 3, the at least one memory and the computer program code are configured to, with the at least one processor, cause the apparatus to share the safety period parameter among the source cell, the target cell, and the user terminal (203).

5. An apparatus as claimed in any one of the preceding claims 2 to 4, the at least one memory and the computer program code are configured to, with the at least one processor, cause the apparatus to enable a fast re-connecting of the user terminal (203) to the source cell by utilizing pre-agreed admission control.

6. An apparatus as claimed in any one of the preceding claims 2 to 5, the at least one memory and the computer program code are configured to, with the at least one processor, cause the apparatus to evaluate QoS in a target cell after a handover of the user terminal (203) to the target cell; and
provide a possibility for the user terminal (203) to revert the handover by a fast return to the source cell, if the expected and/or experienced QoS does not exceed a predefined threshold value.

7. An apparatus as claimed in any one of the preceding claims 2 to 6, the at least one memory and the computer program code are configured to, with the at least one processor, cause the apparatus to supply, in connection with the handover of the user terminal (203) from the source cell to the target cell, or prior to the handover, the user terminal (203) with the value of the safety period parameter, and the QoS-based triggering rules;
store a context sufficient to facilitate the re-connecting of the user terminal (203) to the source cell; and
initiate a timer keeping track of progress compared to the value of the safety period parameter; and
provide the user terminal (203) or the target cell with a return-to-source-cell trigger.

8. A target cell apparatus (202) comprising at least one processor; and at least one memory including a computer program code, the at least one memory and the computer program code are configured to, with the at least one processor, cause the apparatus (202) to
obtain a value of a safety period parameter defined for a user terminal (203) such that a corresponding safety period applies immediately after a successful handover of a user terminal (203) from a source cell to a target cell, wherein an immediate re-connecting of the user terminal (203) to the source cell is applicable within the safety period;
obtain information on QoS-based triggering rules for the immediate re-connecting of the user terminal (203) to the source cell; and
trigger, if needed, the immediate re-connecting of the user terminal (203) to the source cell according to the QoS-based triggering rules.

9. An apparatus as claimed in claim 8, the at least one memory and the computer program code are configured to, with the at least one processor, cause the apparatus to share the safety period parameter among the source cell, the target cell, and the user terminal (203).

10. An apparatus as claimed in claim 8, or 9, the at least one memory and the computer program code are configured to, with the at least one processor, cause the apparatus to enable a fast re-connecting of the user terminal (203) to the source cell by utilizing pre-agreed admission control.

11. An apparatus as claimed in any one of the preceding claims 8 to 10, the at least one memory and the computer program code are configured to, with the at least one processor, cause the apparatus to evaluate QoS in a target cell after a handover of the user terminal (203) to the target cell; and
provide a possibility for the user terminal (203) to revert the handover by a fast return to the source cell, if the expected and/or experienced QoS does not exceed a predefined threshold value.

12. An apparatus as claimed in any one of the preceding claims 8 to 11, the at least one memory and the computer program code are configured to, with the at least one processor, cause the apparatus to in connection with the handover of the user terminal (203) from the source cell to the target cell, or prior to the handover, initiate a timer keeping track of progress compared to the value of the safety period parameter, and
receive a return-to-source-cell trigger from the source cell.

13. An apparatus as claimed in any one of the preceding claims 8 to 12, the at least one memory and the computer program code are configured to, with the at least one processor, cause the apparatus to after handover completion, monitor QoS of the hand-in user terminal (203) according to a provided return-to-source-cell trigger, and if a trigger event takes place and the safety period has not yet passed; and
initiate the re-connecting of the user terminal (203) to the source cell, by commanding the user terminal (203) to re-connect to the source cell.

14. A user terminal (203) comprising at least one processor; and at least one memory including a computer program code, the at least one memory and the computer program code are configured to, with the at least one processor, cause the user terminal (203) to
obtain a value of a safety period parameter such that a corresponding safety period applies immediately after a successful handover of the user terminal (203) from a source cell to a configured target cell, wherein an immediate re-connecting of the user terminal (203) to the source cell is applicable within the safety period;
obtain information on QoS-based triggering rules for the immediate re-connecting of the user terminal (203) to the source cell; and
trigger, if needed, the immediate re-connecting of the user terminal (203) to the source cell according to the QoS-based triggering rules.

15. A user terminal (203) as claimed in claim 14, the at least one memory and the computer program code are configured to, with the at least one processor, cause the user terminal (203) to
evaluate QoS in a target cell after a handover of the user terminal (203) to the target cell; and
provide a possibility for the user terminal (203) to revert the handover by a fast return to the source cell, if the expected and/or experienced QoS does not exceed a predefined threshold value.

16. A user terminal (203) as claimed in claims 14, or 15, the at least one memory and the computer program code are configured to, with the at least one processor, cause the user terminal (203) to
receive, in connection with the handover of the user terminal (203) from the source cell to the target cell, or prior to the handover, from the source cell, the value of the safety period parameter, and the QoS-based triggering rules;
store a context sufficient to facilitate the re-connecting of the user terminal (203) to the source cell;
initiate a timer keeping track of progress compared to the value of the safety period parameter; and
receive a return-to-source-cell trigger.

17. A user terminal (203) as claimed in any one of the preceding claims 14 to 16, the at least one memory and the computer program code are configured to, with the at least one processor, cause the user terminal (203) to after handover completion, monitor QoS relative to a provided return-to-source-cell trigger, wherein if a trigger event takes place and the safety period has not yet passed;
initiate the re-connecting of the user terminal (203) to the source cell;
terminate the connection to the target cell; and
re-connect the user terminal (203) to the source cell.

18. A computer program product, comprising program code means configured to perform method steps of claim 1 when the program is run on a computer.

## Patentansprüche

1. Verfahren zur Neuverbindung eines Anwenderendgeräts (203) mit einer Quellzelle in einem Kommunikationssystem, aufweisend die Schritte
Bereitstellen, in einer Netzwerkvorrichtung, eines Werts eines Sicherheitsperiodenparameters, sodass eine entsprechende Sicherheitsperiode unmittelbar nach einer erfolgreichen Übergabe des Anwenderendgeräts (203) von der Quellzelle an eine konfigurierte Zielzelle angewendet wird, wobei eine unmittelbare Neuverbindung des Anwenderendgeräts (203) mit der Quellzelle innerhalb der Sicherheitsperiode anwendbar ist;
Informieren des Anwenderendgeräts (203) über das Anwenden der Sicherheitsperiode, den Wert des Sicherheitsperiodenparameters wie auch über QoSbasierte Auslöseregeln für die unmittelbare Neuverbindung des Anwenderendgeräts (203) mit der Quellzelle; und
Auslösen, falls nötig, der unmittelbaren Neuverbindung des Anwenderendgeräts (203) mit der Quellzelle gemäß den QoS-basierten Auslöseregeln.

2. Quellzellenvorrichtung (201), aufweisend zumindest einen Prozessor; und zumindest einen Speicher, der einen Rechnerprogrammcode enthält, wobei der zumindest eine Speicher und der Rechnerprogrammcode konfiguriert sind, mit dem zumindest einen Prozessor, die Vorrichtung (201) zum
Definieren eines Werts eines Sicherheitsperiodenparameters, sodass eine entsprechende Sicherheitsperiode unmittelbar nach einer erfolgreichen Übergabe eines Anwenderendgeräts (203) von einer Quellzelle an eine konfigurierte Zielzelle angewendet wird, wobei eine unmittelbare Neuverbindung des Anwenderendgeräts (203) mit der Quellzelle innerhalb der Sicherheitsperiode anwendbar ist; und
Informieren des Anwenderendgeräts (203) über das Anwenden der Sicherheitsperiode, den Wert des Sicherheitsperiodenparameters wie auch über QoSbasierte Auslöseregeln für die unmittelbare Neuverbindung des Anwenderendgeräts (203) mit der Quellzelle, damit die unmittelbare Neuverbindung des Anwenderendgeräts (203) mit der Quellzelle gemäß den QoS-basierten Auslöseregeln, falls nötig, ausgelöst wird,
zu veranlassen.

3. Vorrichtung nach Anspruch 2, wobei der zumindest eine Speicher und der Rechnerprogrammcode konfiguriert sind, mit dem zumindest einen Prozessor die Vorrichtung zu veranlassen, den Sicherheitsperiodenparameter unmittelbar nach einer weiteren erfolgreichen Übergabe des Anwenderendgeräts (203) von der 2ielzelle an eine weitere Zelle zurückzusetzen.

4. Vorrichtung nach Anspruch 2 oder 3, wobei der zumindest eine Speicher und der Rechnerprogrammcode konfiguriert sind, mit dem zumindest einen Prozessor die Vorrichtung zu veranlassen, den Sicherheitsperiodenparameter mit der Quellzelle, der Zielzelle und dem Anwenderendgerät (203) zu teilen.

5. Vorrichtung nach einem der vorangehenden Ansprüche 2 bis 4, wobei der zumindest eine Speicher und der Rechnerprogrammcode konfiguriert sind, mit dem zumindest einen Prozessor die Vorrichtung zu veranlassen, eine schnelle Neuverbindung des Anwenderendgeräts (203) mit der Quellzelle durch Nutzen einer vorab genehmigten Zulassungssteuerung zu ermöglichen.

6. Vorrichtung nach einem der vorangehenden Ansprüche 2 bis 5, wobei der zumindest eine Speicher und der Rechnerprogrammcode konfiguriert sind, mit dem zumindest einen Prozessor die Vorrichtung zum
Auswerten des QoS in einer Zielzelle nach einer Übergabe des Anwenderendgeräts (203) an die Zielzelle; und
Bereitstellen einer Möglichkeit für das Anwenderendgerät (203), die Übergabe durch eine schnelle Rückkehr zu der Quellzelle umzukehren, falls der erwartete und/oder festgestellte QoS einen vorbestimmten Schwellenwert nicht überschreitet,
zu veranlassen.

7. Vorrichtung nach einem der vorangehenden Ansprüche 2 bis 6, wobei der zumindest eine Speicher und der Rechnerprogrammcode konfiguriert sind, mit dem zumindest einen Prozessor die Vorrichtung zum Versorgen des Anwenderendgeräts (203) mit dem Wert des Sicherheitsperiodenparameters und den QoSbasierten Auslöseregeln in Verbindung mit der Übergabe des Anwenderendgeräts (203) von der Quellzelle an die Zielzelle oder vor der Übergabe;
Speichern eines Zusammenhangs, der ausreicht, die Neuverbindung des Anwenderendgeräts (203) mit der Quellzelle zu erleichtern; und
Starten einer Zeituhr, die den Verlauf im Vergleich zum Wert des Sicherheitsperiodenparameters verfolgt; und
Bereitstellen des Anwenderendgeräts (203) der Zielzelle mit einem Rückkehr-zur-Quellzelle-Auslöser
zu veranlassen.

8. Zielzellvorrichtung (202), aufweisend zumindest einen Prozessor; und zumindest einen Speicher, der einen Rechnerprogrammcode enthält, wobei der zumindest eine Speicher und der Rechnerprogrammcode konfiguriert sind, mit dem zumindest einen Prozessor die Vorrichtung (202) zum
Erhalten eines Werts eines Sicherheitsperiodenparameters, der für ein Anwenderendgerät (203) definiert ist, sodass eine entsprechende Sicherheitsperiode unmittelbar nach einer erfolgreichen Übergabe eines Anwenderendgeräts (203) von einer Quellzelle an eine Zielzelle angewendet wird, wobei eine unmittelbare Neuverbindung des Anwenderendgeräts (203) mit der Quellzelle innerhalb der Sicherheitsperiode anwendbar ist;
Erhalten von Informationen über QoS-basierte Auslöseregeln für die unmittelbare Neuverbindung des Anwenderendgeräts (203) mit der Quellzelle; und
Auslösen, falls nötig, der unmittelbaren Neuverbindung des Anwenderendgeräts (203) mit der Quellzelle gemäß den QoS-basierten Auslöseregeln,
zu veranlassen.

9. Vorrichtung nach Anspruch 8, wobei der zumindest eine Speicher und der Rechnerprogrammcode konfiguriert sind, mit dem zumindest einen Prozessor die Vorrichtung zu veranlassen, den Sicherheitsperiodenparameter mit der Quellzelle, der Zielzelle und dem Anwenderendgerät (203) zu teilen.

10. Vorrichtung nach Anspruch 8 oder 9, wobei der zumindest eine Speicher und der Rechnerprogrammcode konfiguriert sind, mit dem zumindest einen Prozessor die Vorrichtung zu veranlassen, eine schnelle Neuverbindung des Anwenderendgeräts (203) mit der Quellzelle durch Nutzen einer vorab genehmigten Zulassungssteuerung zu ermöglichen.

11. Vorrichtung nach einem der vorangehenden Ansprüche 8 bis 10, wobei der zumindest eine Speicher und der Rechnerprogrammcode konfiguriert sind, mit dem zumindest einen Prozessor die Vorrichtung zum
Auswerten des QoS in einer Zielzelle nach einer Übergabe des Anwenderendgeräts (203) an die Zielzelle; und
Bereitstellen einer Möglichkeit für das Anwenderendgerät (203), die Übergabe durch eine schnelle Rückkehr zu der Quellzelle umzukehren, falls der erwartete und/oder festgestellte QoS einen vorbestimmten Schwellenwert nicht überschreitet,
zu veranlassen.

12. Vorrichtung nach einem der vorangehenden Ansprüche 8 bis 11, wobei der zumindest eine Speicher und der Rechnerprogrammcode konfiguriert sind, mit dem zumindest einen Prozessor die Vorrichtung zum
Starten einer Zeituhr, die den Verlauf im Vergleich zum Wert des Sicherheitsperiodenparameters verfolgt, in Verbindung mit der Übergabe des Anwenderendgeräts (203) von der Quellzelle an die Zielzelle oder vor der Übergabe und
Empfangen eines Rückkehr-zur-Quellzelle-Auslösers von der Quellzelle
zu veranlassen.

13. Vorrichtung nach einem der vorangehenden Ansprüche 8 bis 12, wobei der zumindest eine Speicher und der Rechnerprogrammcode konfiguriert sind, mit dem zumindest einen Prozessor die Vorrichtung zum
Überwachen, nach Übergabebeendigung, des QoS des übergebenen Anwenderendgeräts (203) gemäß einem bereitgestellten Rückkehr-zur-Quellzelle-Auslöser und falls ein Auslöseereignis stattfindet und die Sicherheitsperiode noch nicht vorbei ist; und
Starten der Neuverbindung des Anwenderendgeräts (203) mit der Quellzelle durch Anweisen des Anwenderendgeräts (203), sich mit der Quellzelle neu zu verbinden,
zu veranlassen.

14. Anwenderendgerät (203), aufweisend zumindest einen Prozessor; und zumindest einen Speicher, der einen Rechnerprogrammcode enthält, wobei der zumindest eine Speicher und der Rechnerprogrammcode konfiguriert sind, mit dem zumindest einen Prozessor, das Anwenderendgerät (203) zum
Erhalten eines Werts eines Sicherheitsperiodenparameters, sodass eine entsprechende Sicherheitsperiode unmittelbar nach einer erfolgreichen Übergabe eines Anwenderendgeräts (203) von einer Quellzelle an eine konfigurierte Zielzelle angewendet wird, wobei eine unmittelbare Neuverbindung des Anwenderendgeräts (203) mit der Quellzelle innerhalb der Sicherheitsperiode anwendbar ist;
Erhalten von Informationen über QoS-basierte Auslöseregeln für die unmittelbare Neuverbindung des Anwenderendgeräts (203) mit der Quellzelle; und
Auslösen, falls nötig, der unmittelbaren Neuverbindung des Anwenderendgeräts (203) mit der Quellzelle gemäß den QoS-basierten Auslöseregeln zu veranlassen.

15. Anwenderendgerät (203) nach Anspruch 14, wobei der zumindest eine Speicher und der Rechnerprogrammcode konfiguriert sind, mit dem zumindest einen Prozessor das Anwenderendgerät (203) zum
Auswerten des QoS in einer Zielzelle nach einer Übergabe des Anwenderendgeräts (203) an die Zielzelle; und
Bereitstellen einer Möglichkeit für das Anwenderendgerät (203), die Übergabe durch eine schnelle Rückkehr zu der Quellzelle umzukehren, falls der erwartete und/oder festgestellte QoS einen vorbestimmten Schwellenwert nicht überschreitet,
zu veranlassen.

16. Anwenderendgerät (203) nach Anspruch 14 oder 15, wobei der zumindest eine Speicher und der Rechnerprogrammcode konfiguriert sind, mit dem zumindest einen Prozessor das Anwenderendgerät (203) zum
Empfangen des Werts des Sicherheitsperiodenparameters und der QoS-basierten Auslöseregeln in Verbindung mit der Übergabe des Anwenderendgeräts (203) von der Quellzelle an die Zielzelle oder vor der Übergabe;
Speichern eines Zusammenhangs, der ausreicht, die Neuverbindung des Anwenderendgeräts (203) mit der Quellzelle zu erleichtern;
Starten einer Zeituhr, die den Verlauf verglichen mit dem Wert des Sicherheitsperiodenparameters verfolgt; und
Empfangen eines Rückkehr-zur-Quellzelle-Auslösers
zu veranlassen.

17. Anwenderendgerät (203) nach einem der vorangehenden Ansprüche 14 bis 16, wobei der zumindest eine Speicher und der Rechnerprogrammcode konfiguriert sind, mit dem zumindest einen Prozessor das Anwenderendgerät (203) zum
Überwachen, nach Übergabebeendigung, des QoS relativ zu einem bereitgestellten Rückkehr-zur-Quellzelle-Auslöser, wobei, falls ein Auslöseereignis stattfindet und die Sicherheitsperiode noch nicht vorbei ist; und
Starten der Neuverbindung des Anwenderendgeräts (203) mit der Quellzelle;
Beenden der Verbindung mit der Zielquelle; und Neuverbinden des Anwenderendgeräts (203) mit der Quellzelle
zu veranlassen.

18. Rechnerprogrammprodukt, aufweisend Programmcodemittel, die konfiguriert sind, Verfahrensschritte nach Anspruch 1 auszuführen, wenn das Programm auf einem Rechner läuft.

## Revendications

1. Procédé de reconnexion d'un terminal utilisateur (203) à une cellule source dans un système de communications, comprenant les étapes consistant à fournir, dans un appareil de réseau, une valeur d'un paramètre de période de sécurité de telle sorte qu'une période de sécurité correspondante s'applique immédiatement après un transfert réussi du terminal utilisateur (203) de la cellule source à une cellule cible configurée, dans lequel une reconnexion immédiate du terminal utilisateur (203) à la cellule source est applicable durant la période de sécurité ;
informer le terminal utilisateur (203) à l'application de la période de sécurité, de la valeur du paramètre de période de sécurité, ainsi que des règles de déclenchement basées sur la QoS pour la reconnexion immédiate du terminal utilisateur (203) à la cellule source ; et déclencher, le cas échéant, la reconnexion immédiate du terminal utilisateur (203) à la cellule source conformément aux règles de déclenchement basées sur la QoS.

2. Appareil de cellule source (201) comprenant au moins un processeur ; et au moins une mémoire comportant un code de programme informatique, l'au moins une mémoire et le code de programme informatique sont configurés pour, avec l'au moins un processeur, amener l'appareil (201) à définir une valeur d'un paramètre de période de sécurité de telle sorte qu'une période de sécurité correspondante s'applique immédiatement après un transfert réussi du terminal utilisateur (203) d'une cellule source à une cellule cible configurée, dans lequel une reconnexion immédiate du terminal utilisateur (203) à la cellule source est applicable durant la période de sécurité ; et informer le terminal utilisateur (203) à l'application de la période de sécurité, de la valeur du paramètre de période de sécurité, ainsi que des règles de déclenchement basées sur la QoS pour la reconnexion immédiate du terminal utilisateur (203) à la cellule source, de telle sorte que la reconnexion immédiate du terminal utilisateur (203) à la cellule source soit déclenchée, le cas échéant, conformément aux règles de déclenchement basées sur la QoS.

3. Appareil selon la revendication 2, l'au moins une mémoire et le code de programme informatique sont configurés pour, avec l'au moins un processeur, amener l'appareil à réinitialiser immédiatement le paramètre de période de sécurité après un autre transfert réussi du terminal utilisateur (203) de la cellule cible à une autre cellule.

4. Appareil selon la revendication 2, ou 3, l'au moins une mémoire et le code de programme informatique sont configurés pour, avec l'au moins un processeur, amener l'appareil à partager le paramètre de période de sécurité entre la cellule source, la cellule cible, et le terminal utilisateur (203).

5. Appareil selon l'une quelconque des revendications précédentes 2 à 4, l'au moins une mémoire et le code de programme informatique sont configurés pour, avec l'au moins un processeur, amener l'appareil à permettre une reconnexion rapide du terminal utilisateur (203) à la cellule cible en utilisant une commande d'admission préagréée.

6. Appareil selon l'une quelconque des revendications précédentes 2 à 5, l'au moins une mémoire et le code de programme informatique sont configurés pour, avec l'au moins un processeur, amener l'appareil à évaluer la QoS dans une cellule cible après un transfert du terminal utilisateur (203) à la cellule cible ; et
fournir une possibilité au terminal utilisateur (203) d'inverser le transfert par un retour rapide à la cellule source, si la QoS anticipée et/ou rencontrée ne dépasse pas une valeur limite prédéfinie.

7. Appareil selon l'une quelconque des revendications précédentes 2 à 6, l'au moins une mémoire et le code de programme informatique sont configurés pour, avec l'au moins un processeur, amener l'appareil à fournir relativement au transfert du terminal utilisateur (203) de la cellule source à la cellule cible, ou avant le transfert, au terminal utilisateur (203) la valeur du paramètre de période de sécurité, et les règles de déclenchement basées sur la QoS ;
mémoriser un contexte suffisant pour faciliter la reproduction du terminal utilisateur (203) à la cellule source ; et
lancer une temporisation qui suit la progression en comparaison à la valeur du paramètre de période de sécurité ; et
fournir au terminal utilisateur (203) ou à la cellule cible un déclencheur de retour à la cellule source.

8. Appareil de cellule cible (202) comprenant au moins un processeur ; et au moins une mémoire comportant un code de programme informatique, l'au moins une mémoire et le code de programme informatique sont configurés pour, avec l'au moins un processeur, amener l'appareil (202) à obtenir une valeur d'un paramètre de période de sécurité défini pour un terminal utilisateur (203) de telle sorte qu'une période de sécurité correspondante s'applique immédiatement après un transfert réussi d'un terminal utilisateur (203) d'une cellule source à une cellule cible, dans lequel une reconnexion immédiate du terminal utilisateur (203) à la cellule source est applicable durant la période de sécurité ;
obtenir des informations sur les règles de déclenchement basées sur la QoS pour la reconnexion immédiate du terminal utilisateur (203) à la cellule source ; et
déclencher, le cas échéant, la reconnexion immédiate du terminal utilisateur (203) à la cellule source en fonction des règles de déclenchement basées sur la QoS.

9. Appareil selon la revendication 8, l'au moins une mémoire et le code de programme informatique sont configurés pour, avec l'au moins un processeur, amener l'appareil à partager le paramètre de période de sécurité entre la cellule source, la cellule cible, et le terminal utilisateur (203).

10. Appareil selon la revendication 8, ou 9, l'au moins une mémoire et le code de programme informatique sont configurés pour, avec l'au moins un processeur, amener l'appareil à permettre une reconnexion rapide du terminal utilisateur (203) à la cellule cible en utilisant une commande d'admission préagréée.

11. Appareil selon l'une quelconque des revendications précédentes 8 à 10, l'au moins une mémoire et le code de programme informatique sont configurés pour, avec l'au moins un processeur, amener l'appareil à évaluer la QoS dans une cellule cible après un transfert du terminal utilisateur (203) à la cellule cible ; et
fournir une possibilité au terminal utilisateur (203) d'inverser le transfert par un retour rapide à la cellule source, si la QoS anticipée et/ou expérimentée ne dépasse pas une valeur limite prédéfinie.

12. Appareil selon l'une quelconque des revendications précédentes 8 à 11, l'au moins une mémoire et le code de programme informatique sont configurés pour, avec l'au moins un processeur, amener l'appareil à, relativement au transfert du terminal utilisateur (203) de la cellule source à la cellule cible, ou avant le transfert, lancer une temporisation qui suit la progression en comparaison à la valeur du paramètre de période de sécurité ; et
recevoir un déclencheur de retour à la cellule source depuis la cellule source.

13. Appareil selon l'une quelconque des revendications précédentes 8 à 12, l'au moins une mémoire et le code de programme informatique sont configurés pour, avec l'au moins un processeur, amener l'appareil à, au terme du transfert, contrôler la QoS du terminal utilisateur (203) transféré, conformément à un déclencheur de retour à la cellule source fourni, et si un événement de déclenchement intervient et la période de sécurité n'a pas encore été dépassée ; et
lancer la reconnexion du terminal utilisateur (203) à la cellule source, en commandant au terminal utilisateur (203) de se reconnecter à la cellule source.

14. Terminal utilisateur (203) comprenant au moins un processeur ; et au moins une mémoire comportant un code de programme informatique, l'au moins une mémoire et le code de programme informatique sont configurés pour, avec l'au moins un processeur, amener le terminal utilisateur (203) à obtenir une valeur d'un paramètre de période de sécurité de telle sorte qu'une période de sécurité correspondante s'applique immédiatement après un transfert réussi du terminal utilisateur (203) d'une cellule source à une cellule cible configurée, dans lequel une reconnexion immédiate du terminal utilisateur (203) à la cellule source est applicable durant la période de sécurité ; obtenir des informations sur les règles de déclenchement basées sur la QoS pour la reconnexion immédiate du terminal utilisateur (203) à la cellule source ; et
déclencher, le cas échéant, la reconnexion immédiate du terminal utilisateur (203) à la cellule source en fonction des règles de déclenchement basées sur la QoS.

15. Terminal utilisateur (203) selon la revendication 14, l'au moins une mémoire et le code de programme informatique sont configurés pour, avec l'au moins un processeur, amener le terminal utilisateur (203) à évaluer la QoS dans une cellule cible après un transfert du terminal utilisateur (203) à la cellule cible ; et
fournir une possibilité au terminal utilisateur (203) d'inverser le transfert par un retour rapide à la cellule source, si la QoS anticipée et/ou rencontrée ne dépasse pas une valeur limite prédéfinie.

16. Terminal utilisateur (203) selon la revendication 14 ou 15, l'au moins une mémoire et le code de programme informatique sont configurés pour, avec l'au moins un processeur, amener le terminal utilisateur (203) à recevoir, relativement au transfert du terminal utilisateur (203) de la cellule source à la cellule cible, ou avant le transfert, depuis la cellule source, la valeur du paramètre de période de sécurité, et les règles de déclenchement basées sur la QoS ;
mémoriser un contexte suffisant pour faciliter la reconnexion du terminal utilisateur (203) à la cellule source ;
lancer une temporisation qui suit la progression en comparaison à la valeur du paramètre de période de sécurité ; et
recevoir un déclencheur de retour à la cellule source.

17. Terminal utilisateur (203) selon l'une quelconque des revendications précédentes 14 à 16, l'au moins une mémoire et le code de programme informatique sont configurés pour, avec l'au moins un processeur, amener le terminal utilisateur (203) à, au terme du transfert, contrôler la QoS relativement à un déclencheur de retour à la cellule source fourni, dans lequel si un événement de déclenchement intervient et la période de sécurité n'a pas encore été dépassée ;
la reconnexion du terminal utilisateur (203) à la cellule source est lancée ;
il est mis fin à la connexion à la cellule cible ; et
le terminal utilisateur (203) est reconnecté à la cellule source.

18. Produit de programme informatique, comprenant un moyen de code de programme configuré pour exécuter les étapes de procédé de la revendication 1 quand le programme est exécuté sur un ordinateur.
